(19) Europäisches Patentamt / European Patent Office / Office européen des brevets

(11) **EP 3 241 111 B1**

(12) **EUROPEAN PATENT SPECIFICATION**

(45) Date of publication and mention
of the grant of the patent:
**24.07.2019 Bulletin 2019/30**

(51) Int Cl.:
**G06F 9/50** *(2006.01)*   **H04L 29/08** *(2006.01)*

(21) Application number: **15813306.6**

(22) Date of filing: **10.12.2015**

(86) International application number:
**PCT/EP2015/079250**

(87) International publication number:
**WO 2016/107725 (07.07.2016 Gazette 2016/27)**

(54) **PROVISIONING OF TELECOMMUNICATIONS RESOURCES**

BEREITSTELLUNG VON FERNMELDENETZRESSOURCEN

FOURNITURE DE RESSOURCES DE TÉLÉCOMMUNICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2014 EP 14250122**

(43) Date of publication of application:
**08.11.2017 Bulletin 2017/45**

(73) Proprietor: **British Telecommunications public limited company**
**London EC1A 7AJ (GB)**

(72) Inventors:
• **DI CAIRANO-GILFEDDER, Carla**
**London EC1A 7AJ (GB)**
• **SHAKYA, Siddhartha**
**London EC1A 7AJ (GB)**

(74) Representative: **British Telecommunications public limited company**
**Intellectual Property Department**
**Ground Floor, Faraday Building**
**1 Knightrider Street**
**London EC4V 5BT (GB)**

(56) References cited:
**US-A1- 2008 080 396    US-A1- 2011 153 507**
**US-A1- 2013 262 681    US-A1- 2014 328 214**

**Description**

This invention relates to provisioning of resources in a telecommunications network, and in particular allocation of resources to services having different requirements for properties such as latency and bandwidth.

Collaborative computing is being used increasingly in scientific fields such as bio-technologies, climate predictions and experimental physics where vast amounts of data are generated, stored in data centers, shared, and accessed to facilitate simulations and validations. Scientific data often needs to be distributed and accessed from geographically disparate areas in real-time and in large volumes e.g. petabytes ($10^{15}$ bytes).

The ability to support high bandwidth and low latency on-demand network services is becoming increasingly critical in the provision of network platforms to support collaborative computing and distributed data management where large amounts of data are generated, shared, and accessed to facilitate simulations and validations by customers.

Collaborative computing-associated network services present new challenges to network providers as large bandwidths need to be guaranteed end-to-end, and often end-to-end quality of service needs to be ensured. In such circumstances, network conditions are heavily sensitive to allocated resources, as a single reservation can potentially fill all available resources along certain routes. In addition, service consumers do not always require an end-to-end "bitpipe" with a known destination and time, but may be flexible and benefit from being offered options of timescales and performance. For example a first data centre may store certain data and have computational power available immediately, whilst a second data centre may have more computational power, but with the necessary bandwidth only available at a later date.

It is therefore desirable to identify an optimal allocation of resources to allow data transfer across networks to, from, or between data centres according to user requirements and the availability of network resources.

In traditional mechanisms for bandwidth reservation a user needing a network service to certain data centres would, by trial-and-error, evaluate various alternatives, trading-off between resource availabilities according to the user's preferences. However the information that a service provider can traditionally expose to the user, such as bandwidth and delay, are insufficient for the user to estimate the overall quality-of-service that can be expected (e.g. interactivity). A user needing on-demand network services faces the undesirable task of finding appropriate data centres by trial-and-error, with limited information of real metrics dictating the quality of the service.

Prior art systems, such as those disclosed in US2011/153507, US2013/262681, US2014/328214 and US2008/080396 allocate data handling capacity in real time in response to service requests. Although some of these references, in particular the last-named, do include some load balancing features to allow capacity to be reallocated between tasks, this is too done in real time and is not controlled by the end-user.

The present invention offers the end users comparisons between different selection criteria, and in particular can allow a choice to be made.

According to a first aspect of the invention, there is provided a method of allocating network resources in a cloud-based data network by identifying a plurality of data centres capable of providing services required by a user, analysing a plurality of characteristics of paths connecting nodes in the network by which the user and the respective data centres may communicate, identifying a set of such paths whose characteristics are optimised for predetermined service objective criteria and, for each path in the set, generating a display indicative of characteristics of that path and, in response to a selection input by a user, allocating resources to provide a path selected by the user between a user-connected node and a data centre, characterised in that the characteristics of each path analysed include a time at which the path will be available.

According to a second aspect, the invention provides network resource allocation apparatus for controlling resources in a cloud-based data network, comprising:

- a data collator for processing network data relating to a network comprising a plurality of interconnected data centres and network nodes, and for processing inputs from a user interface specifying to service objective criteria
- an analyser for analysing a plurality of characteristics of paths by which the users and the respective data centres may communicate, and thereby identifying a set of such paths whose characteristics are optimised for service objective criteria received over the user interface
- a selection processor for

  ▪ generating a display indicative of characteristics of the set of paths for transmission to the user interface,
  ▪ receiving a user input identifying one of the set of paths
  ▪ and controlling the network to provide the selected path,

characterised in that the characteristics of each path analysed include a time at which the path will be available.

In the embodiment of the invention to be described, the characteristics include at least two of connectivity, delay, bandwidth and cost, and the display indicates characteristics of resources available for a plurality of different service types, including a guaranteed-bandwidth service and a "best-efforts" service. The selection of data centres associated with the set of paths selected for association with a first service objective is independent of the selection of data centres associated with the set of paths selected for association with another service objective.

In the embodiment to be described, the user is presented with a set of paths which are Pareto-optimised according to two or more service objective criteria, which preferably are, or include, bandwidth and delay. The criteria for inclusion in the set of paths preferably include a time window.

It will be recognised that the invention can be embodied in software run on a general-purpose computer, and the invention therefore also provides for a computer program or suite of computer programs executable by a processor to cause the processor to perform the method of the first aspect of invention or to operate as the apparatus of the second aspect of the invention. The processor to be controlled by the software may itself be embodied in two or more physical computing resources in communication with each other.

The invention provides a mechanism that enhances the features of traditional on-demand network services. The invention allows translation of network characteristics such as bandwidth and delay, which may be meaningless to users, to characteristics of services, such as the volume of data that can be expected to be transferred, and whether the service can support interactivity. This allows users to make choices amongst options optimised according to their preferences.

This invention enables the user to specify his preferences as to when the service is required and the indicative bandwidth required. Full visibility of network connectivity and its availability is then used to carry out a multi-objective optimisation across the bandwidth and the delay dimensions independently. This optimisation seeks Pareto-optimal solutions: that is, the set of solutions for which none of the objective functions can be improved in value without degrading some of the other objective values. This optimisation identifies a set of data centre locations and associated network characteristics at given time-slots, and will be discussed in more detail later. These network characteristics are then translated into service characteristics in terms of expected quality of service, which in turn are presented to the user.

The invention could be implemented as a cloud-based solution which receives demand requirements from users for example via a web-interphase, maintains a real-time view of the network topology and bandwidth availability in time-slots, and can reserve bandwidth for network services over links as requested by users.

An embodiment of the invention will now be described by way of example with reference to the drawings, in which:

Figure 1 is a schematic diagram indicative of the various functional elements that co-operate to perform a process according to the invention

Figure 2 is a schematic of a simplified network illustrating connectivity between two end points of a network

Figure 3 is a diagrammatic representation of the availability of bandwidth over on individual links of the network time

Figure 4 is a flow diagram illustrating the steps performed by the process

Figure 5 is an illustration of a Pareto-optimised selection

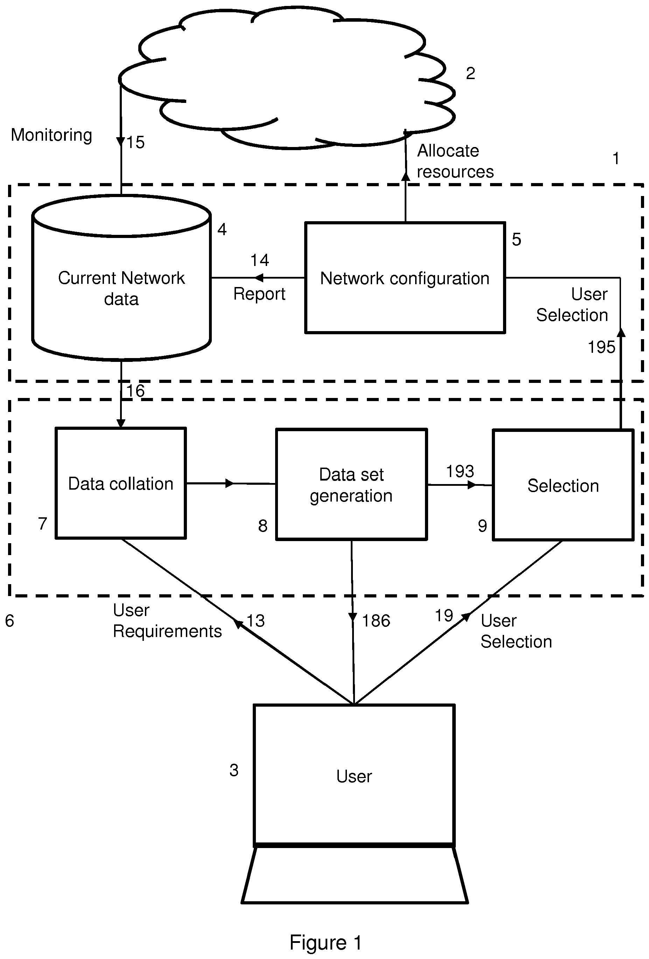

Figure 1 is a schematic diagram indicative of the various functional elements that co-operate to perform a process according to the invention. It will be understood that the individual functional elements may be embodied in software running on a general-purpose computer, or by collaboration between two or more such computers.

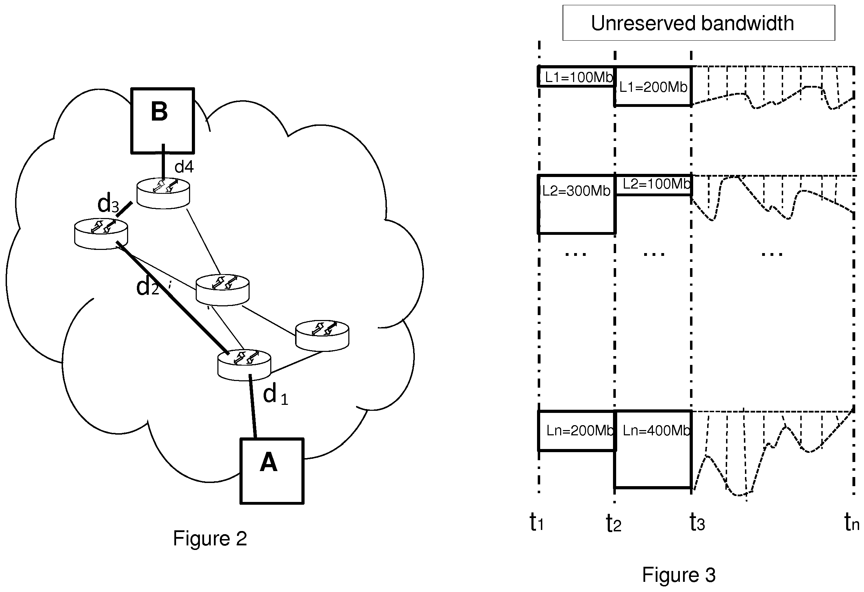

Figure 1 depicts a network management system 1 which maintains "cloud" resources in a network 2 which are available to be allocated to users (such as user 3) according to their requirements. The network management system 1 comprises a monitoring function 4 which maintains a database of the connectivity of the network and characteristics such as the available bandwidth capacity and delay performance of the individual links in the network. The data maintained in the database will be discussed later in relation to Figures 2 and 3.

The network management system 1 also comprises a network configuration system 5 which controls the allocation of resources in the network 2, configures routing through the network, and reports the changes that have been made to the monitoring database 4.

A resource reservation system 6 acts as an interface between the users 3 and the network management system 1, to manage users' requests for network resource. It comprises three stages: a data collation processor 7 which retrieves data from the monitoring database 4 and receives the requirements from the user 3. This data is then processed by a computational processor 8 to identify a set of possible resource allocations, the characteristics of which are returned to the user 3 to make a selection. The user's selection is returned to a selection manager 9 which retrieves the details of the configuration from the processor 8. The selection manager 9 passes the details of the required configuration to the configuration system 5, which sets up the new links in the network 2 and reports the changes to the monitoring database 4.

An example of a simple network is depicted in Figure 2, which depicts a number of possible routes between two end points marked A and B, and the delay times (one way delay or OWD) d1, d2, d3, d4 for the respective individual links L1, L2, L3, L4 for one possible routing.

Figure 3 depicts a typical variation in bandwidth over time for each of the plurality of links L1, L2, ........Ln making up a network (the first two timeslots, from t1 to t2 and from t2 to t3, are shown at an expanded scale). It will be understood that the primary cause for the available bandwidth to vary over time is allocation of bandwidth to applications in response to use requirements. The bandwidth available in future time slots is not fixed, but may change dynamically as the appointed time for the timeslot approaches, as the bandwidth is allocated to meet users' requests. Although transmission times are usually independent of traffic levels, overall end-to-end expected delay may also change over time, namely when heavy traffic causes congestion and gives rise to non-negligible queuing delays.

The system aims to generate a list of data centre locations and associated paths from the user which are obtained by means of the above mentioned multi-objective optimisation that seeks to meet network resource allocations' objectives independently, using network information maintained in the database 4.

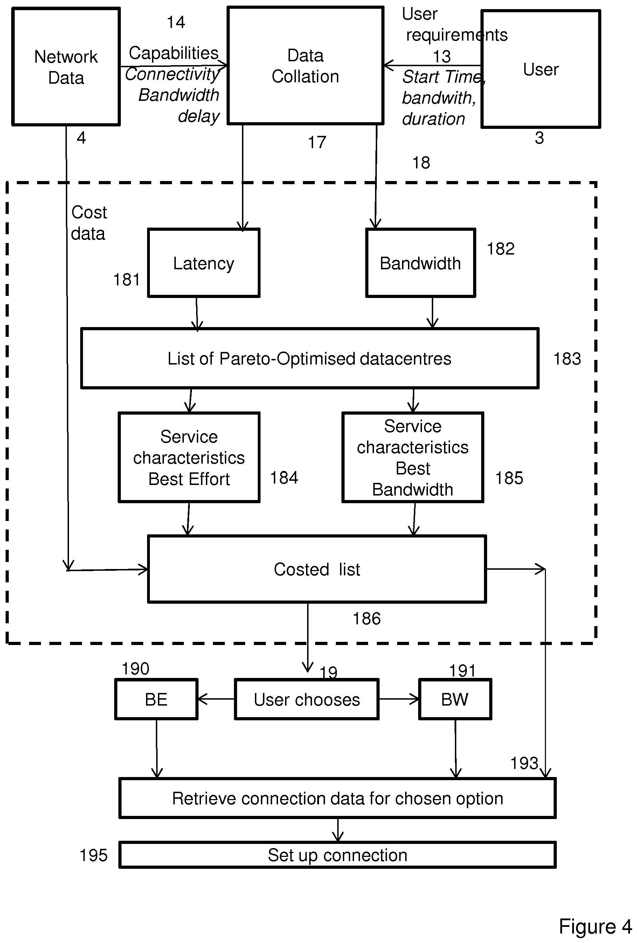

The methodology operating the process is depicted schematically in Figure 4 and involves the following steps.

The data required to operate the process is collected by the data collation processor 7 (step 17) and comes from two sources, namely the user 3, and the network monitoring database 4.

Criteria specified by the user 3 are input to the data collator 7 (step 13) when the user requests a service. These criteria typically include the earliest time (T) when the network service is required (the default time being the present), the indicative bandwidth required (B), and the required service duration.

The network monitoring database 4 has a store of data relating to the network capabilities. In particular it has a store of network connectivity and link performance, represented graphically in Figure 2 and, for each link, its bandwidth availability in each of a plurality of timeslots t1, t2, t3,........tn for each of a number of links L1, L2, ......Ln, represented graphically in Figure 3. This data is maintained and updated from time to time as bandwidth is allocated (step 14) and as performance is monitored (step 15), and retrieved by the data collator 7 (step 16) in response to a user request (13).

Using the data collected, a multi-objective optimisation is performed by the data set generator 8 (step 18). This optimisation is based on the known connectivity between nodes (ref. Figure 2), per-link bandwidth availability per slot (ref. Figure 3) and per-link One-Way Delay (OWD) (ref. Figure 2) and aims to identify m locations and time-slots between $[T, T + \Delta]$ Pareto-optimised for minimising end to end delay and maximising bottleneck bandwidth, where $\Delta$ is a time interval of arbitrary length, and optimisation is run independently over the delay and bandwidth dimensions.

Although minimising delay and maximising bandwidth are both desirable, there may not exist a data centre, and a path to it, that achieves both. The Pareto-solution allows a compromise by identifying paths to data centres such that if an alternative path with a shorter delay exists, this would have an inferior bandwidth and, contrariwise, if a path with a greater bandwidth exists then this would have a worse delay. Typically there will be a plurality of such solutions in the dataset: comparing any two members of the solution dataset, one member will have a better delay, and a worse bandwidth, than the other - if one member of the set were superior to another in both (all) respects, the inferior member would not be a member of the Pareto-optimised set.

For each possible path, the total delay over the links in that path is determined (step 181), and the link with the smallest bandwidth (the bottleneck) is identified (step 182) as this determines the bandwidth of the path as a whole. The path with the largest (least restrictive) bottleneck is then selected as a possible candidate solution. Any data centre which is not reachable by any path with a bottleneck bandwidth greater than the minimum indicative value B (specified by the user in the initial data collation step 13) is eliminated from consideration.

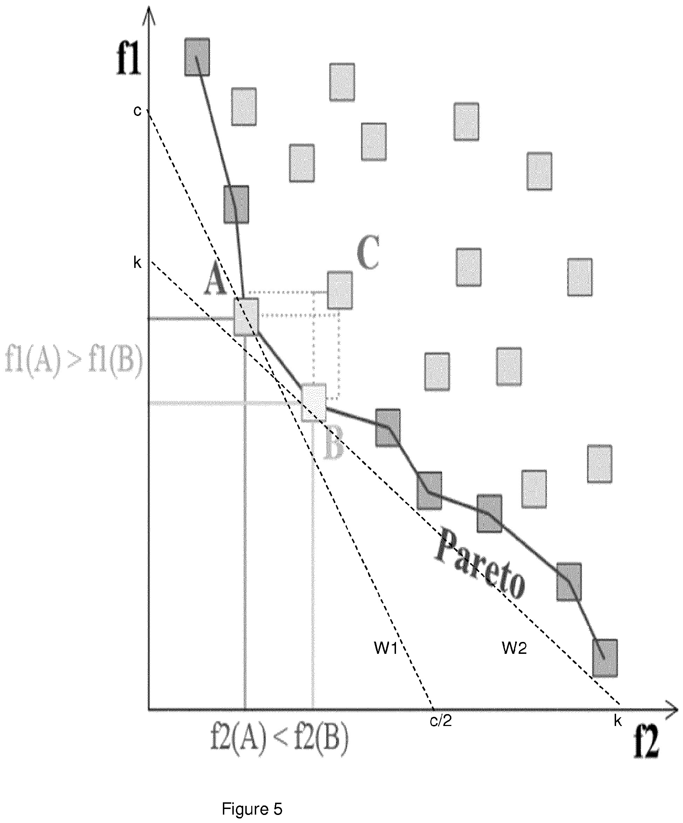

A Pareto optimisation is then carried out. This identifies a solution set of all paths for which no parameter (in this example neither delay nor bandwidth) can be made more optimal by changing to another path without detriment to the other parameter (or, it excludes any path if another path exists whose parameters are all superior to those of the first path).A two-dimensional example is shown in Figure 5. The two parameters, to be interpreted as delay and bandwidth of the f1 and f2 optimisations of the present invention, are illustrated along the axes f1, f2 and the potential datapoints to be considered - to be interpreted as network paths - are shown as square blocks. The optimised solutions are linked by the line marked "Pareto". The other points are non-optimal: taking datapoint "C" as an example, there is at least one datapoint (in this case, two datapoints; A and, B) for which the respective values of both f1 and f2 are lower (better) than for datapoint C. The set of Pareto datapoints, (e.g A,B) are those for which no other datapoint has better values for both properties f1, f2. Thus for datapoint A, although datapoint B (and nine other datapoints) have superior (lower) values for the property f1, and three datapoints have superior values for the property f2, there is no datapoint with a superior value for both properties.

If the relative importance (weighting) of the properties f1, f2 were known, an optimum datapoint could be determined. As shown in Figure 5, the gradients of the two lines W1, W2 represent different weightings (the gradient of line W1 (in which property f1 is twice as important as property f2) being twice that of line W2 (in which properties f1 and f2 are of equal weight), and provide different optimal datapoints A, B respectively. However, such weightings will depend on the user and can be both subjective and non-linear: for example subject to an absolute minimum quality. The present invention offers the user a choice of datapoint solutions, namely data centres and associated network paths, but limits that choice to the Pareto-optimised set.

The data set generator 8 therefore identifies a set of solutions (step 183), each representing a network data centre and associated network characteristics as follows:

$$DCx \ (Tstart, \ BW, \ OWD, \ s) \qquad x=1\ldots m$$

Where: Tstart = Slot start time

BW = Bandwidth available (using the best available path) in the time interval **[Tstart, Tstart** + s], this means that a network path to Xi with at least BW is available for reservation

OWD = One-way delay of the identified network path which is defined as the sum of the per-link OWD transmission delay, plus any queuing delays if these can be expected to be non-negligible during the given time slots, considering the network load.

For each of the data centres DCx identified (step 183), the system calculates characteristics of a best-effort service (i.e. with no bandwidth guarantees) (step 184) and for a guaranteed-bandwidth service (step 185). For the guaranteed bandwidth service, service characteristics for each solution (step 185) are expressed in terms of interactivity level Lx as follows:

| Round trip delay* | Interactivity level |
|---|---|
| RTT < x ms | L1 (best) |
| x ms $\leq$ RTT <y ms | L2 (moderate) |
| y ms $\leq$ RTT | L3 (poor) |

where RTT = 2*OWD as defined above, assuming delay times are symmetrical in both directions

For example, in typical modern networks:

| Round trip delay | Interactivity level L |
|---|---|
| RTT < 100 ms | L1 (best) |
| 100 ms $\leq$ RTT <400 ms | L2 (moderate) |
| 400 ms $\leq$ RTT | L3 (poor) |

For the alternative best-effort service (i.e. with no bandwidth guarantees) (step 184) the characteristics are calculated in terms of data volume that can be transferred in the interval [Tstart, Tstart + s], over the identified network path as a function of expected data throughput Rm:

$$Rm = f \ (delay, \ v1, \ \ldots, \ vn), \qquad vi \ i=1,\ldots n. \ variables$$

where data throughput (often referred to as goodput) is obtained as a function of delay and other network related-parameters vi, i=1 ,...n.

For example, goodput Rm, assuming TCP-based transport layer communication as it is dominant today, can be obtained using the Mathis TCP throughput formula [Mathis, Semke, Mahdavi and Ott: "The Macroscopic Behaviour of The TCP Congestion Avoidance Algorithm" : ACM SIGCOMM Computer Communication Review 27(3): 67-82, 1997] as follows:

$$Rm = (MSS/2*OWD)*(C/sqrt(px))$$

where C=0.93, *MSS*=1460 Bytes (packet payload), and *px* is non-zero network loss. Network loss data can either be assumed to be collected by the Data Collation function (7) for the given paths and time-slots or can be inferred depending on the distance from user to data centre location according to the following heuristics:

If data centre is local (e.g. OWD < d1 ms) then px=p1

If data centre is regional (e.g. d1 ms < OWD < d2 ms) then px=p2

If data centre is within a continent (e.g. d2 ms<OWD<d3 ms) then px=p3

If data centre is across multiple continents (e.g. d3 < OWD) then px=p4

The volume Vm of data that can be transferred in the slot-length s (here assumed in minutes) can be determined from the throughput Rm as follows:

$$Vm = (Rm / 8) * 60 * s$$

(in MBytes assuming Rm is in Mbps)

For each of the identified data centres DCx and associated paths (step 183), characteristics for a best-effort service (step 184) and for a guaranteed-bandwidth service (step 185) can therefore be calculated, and from these values a list of service costs is compiled (step 186) This list specifies the cost to the user depending on whether the services are taken on a bandwidth guaranteed (BG)-basis. If a best-effort option is available at a lower cost (as will generally be the case) this will be offered as well. Costing functions may be defined as follows, to be dependent on the bandwidth and service duration. :

CBE(s,BW) = f(s, BW) where CBE refers to the cost of the BE option

CBG(s, BW) = g (s, BW) where CBG refers to the cost of the BG option

with CBE(s,BW) < CBG(s, BW)

Thus the user 3 can be sent a list of m data centre locations DC1, ..., DCm and associated service characteristics (step 186), identifying for each data centre the characteristics for that centre if operated on a guaranteed bandwidth basis, and if operated a best efforts basis, as well as related costs.

$$DCx \ (Tstart, \ BW, \ s, \ Vm, \ L, \ CBE(s,BW), CBG(s,BW)), \qquad x = 1, \ldots, m$$

Where: Tstart = Slot start time

BW=Bandwidth that can be guaranteed in time interval [Tstart, Tstart + s]

Vm=Data volume that can be transferred in time interval [Tstart, Tstart + s], on a best-effort basis with no bandwidth guarantees

L = Interactivity level, if service taken with guaranteed bandwidth

CBE(s,BW) = cost of service if best-effort service chosen

CBG(s,BW) = cost of service if bandwidth guaranteed service chosen

The details of the path and switching are maintained by the data set generation processor 8, but do not need to be communicated to the user 3, who only needs to know the performance characteristics of each path data centre that is available, and not the details of how that performance is implemented.

The user is given a plurality of options to provide the requested bandwidth, presented as best efforts and guaranteed bandwidth services, involving a number of different data centres. The user 3 can then select one of the offered services (step 19). The user's selection is transmitted to a selection processor 9 which retrieves, from the data set generation processor 8, the details of the data centre and path that provide that service (step 190). For example if an interactive service is required, among the various options offered of the form:

$$DCx\ (Tstart,\ BW,\ s,\ Vm,\ L,\ CBE(s,BW),CBG(s,BW))$$

the user will choose among those DCx with the best L parameter and, depending on the criticality of the service requirement, may choose to buy the service on best-effort basis, or on a bandwidth guaranteed basis.

It the user selects a bandwidth-guaranteed service (step 191), then the selection processor 9 instructs the network configuration processor 5 to reserve bandwidth BW in the time slot [Tstart, Tstart + s] over all links identified in the path to DCx (step 195). The user can expect that both end-points of the communication can inject in the network at rate BW for duration s; in addition the user can expect interactivity level L and indicatively at least Vm data volume transfer (volume Vm if transport based by TCP-based protocols with larger volumes possible with protocols such as UDP).

Alternatively if the user selects a best-effort service (step 190), then the end-points of the transmissions (either the user or the DCx's server) cannot inject in the network more than BW and the selection processor 9 system only causes the network configuration processor to reserve bandwidth BWBE = $\alpha^*$ BW, in the time slot [Tstart, Tstart + s] over all links identified in the path to DCx, (step 195), where $0<\alpha<1$ depends upon the over-booking policies adopted by the network provider for its best-effort traffic.

## Claims

1. A method of allocating network resources to users in a cloud-based data network by identifying (17), for each user (3), a plurality of data centres capable of providing services required by the user, analysing (184, 185) a plurality of characteristics of paths connecting nodes in the network by which the user and each of the identified data centres may communicate, identifying a set of such paths (186), each path having characteristics optimised for criteria defined by a respective predetermined service objective and, for each path in the set, generating a display (3) indicative of characteristics of that path, and, in response to a selection input (19) by the user, allocating resources (195) to provide a path selected by the user between a user-connected node and a data centre, **characterised in that** the characteristics of each path analysed include a time (t1-t2, t2-t3.....) at which the path will be available.

2. A method according to claim 1, wherein the characteristics include at least two of connectivity, delay, bandwidth and cost.

3. A method according to Claim 1 or Claim 2, wherein the display (3) indicates characteristics of resources available for a plurality of different service types (184, 185)

4. A method according to Claim 3, wherein the service types include a guaranteed-bandwidth service (185)

5. A method according to Claim 3 or Claim 4, wherein the service types include a best efforts service (184)

6. A method according to Claim 3, Claim 4 or Claim 5, wherein the selection of data centres associated with the set of paths selected for association with a first service objective (190) is independent of the selection of data centres associated with the set of paths selected for association with another service objective (191)

7. A method according to Claim 1, Claim 2, Claim 3, Claim 4, Claim 5, or Claim 6, wherein the set of paths identified is Pareto-optimised with two or more service objective criteria (183).

8. A method according to Claim 7, wherein the service objective criteria include bandwidth and delay

9. A method according to any preceding claim, wherein the criteria for inclusion in the set of paths for display include a time window.

10. Network resource allocation apparatus for controlling resources in a cloud-based data network, comprising:

   - a data collator (7) for processing network data relating to a network comprising a plurality of interconnected data centres and network nodes, and for processing inputs from user interfaces (3) specifying service criteria defined by predetermined service objectives and the nodes to which the specified services are to be delivered
   - an analyser (8) for identifying one or more of the data centres capable of providing the services specified in the inputs received from the user interfaces, and analysing a plurality of characteristics of paths by which each node may communicate with the data centres so identified, and thereby identifying a set of such paths, each path having characteristics optimised for a respective service objective received from a respective user interface

- a selection processor (9) for

  o generating a display indicative of characteristics of the set of paths for transmission to the user interface (3),
  o receiving a user input (19) identifying one of the set of paths
  o and controlling the network (2, 5) to provide the selected path

**characterised in that** the characteristics of each path analysed include a time at which the path will be available.

11. A network resource allocation system according to claim 10, wherein the selection processor (9) generates sets of paths available for a plurality of different service types

12. A network resource allocation system according to Claim 11, wherein the service types include a guaranteed-bandwidth service and a best efforts service

13. A network resource allocation system according to Claim 10, Claim 11 or Claim 12 wherein the analysis system (8) is arranged to generate a Pareto-optimised set of paths with two or more service objective criteria.

14. A network resource allocation system according to Claim 10, Claim 11, Claim 12 or Claim 13, wherein the service objective criteria include bandwidth and delay

15. A computer program or suite of computer programs executable by a processor to cause the processor to perform the method of any one of claims 1 to 9.


**Patentansprüche**

1. Verfahren zum Zuteilen von Netzressourcen an Benutzer in einem cloudbasierten Datennetz durch Identifizieren (17) einer Vielzahl von Rechenzentren für jeden Benutzer (3), wobei die Rechenzentren zum Bereitstellen von vom Benutzer benötigten Diensten fähig sind, Analysieren (184, 185) einer Vielzahl von Eigenschaften von Wegen, die Knoten in dem Netz verbinden, über die der Benutzer und jedes der identifizierten Rechenzentren kommunizieren können, Identifizieren einer Menge solcher Wege (186), wobei jeder Weg Eigenschaften aufweist, die für Kriterien, die durch ein jeweiliges vorher bestimmtes Dienstziel definiert sind, optimiert sind, und für jeden Weg in der Menge Generieren einer Anzeige (3), die auf Eigenschaften dieses Wegs hinweist, und in Ansprechen auf eine Auswahleingabe (19) durch den Benutzer Zuteilen von Ressourcen (195) zum Bereitstellen eines vom Benutzer ausgewählten Wegs zwischen einem mit dem Benutzer verbundenen Knoten und einem Rechenzentrum, **dadurch gekennzeichnet, dass** die analysierten Eigenschaften jedes Wegs eine Zeit (t1-t2, t2-t3...), zu der der Weg verfügbar sein wird, enthalten.

2. Verfahren nach Anspruch 1, wobei die Eigenschaften mindestens zwei der Elemente Konnektivität, Verzögerung, Bandbreite und Kosten enthalten.

3. Verfahren nach Anspruch 1 oder Anspruch 2, wobei die Anzeige (3) auf Eigenschaften von Ressourcen, die für eine Vielzahl unterschiedlicher Diensttypen (184, 185) verfügbar sind, hinweist.

4. Verfahren nach Anspruch 3, wobei die Diensttypen einen mit einer garantierten Bandbreite angebotenen Dienst (185) enthalten.

5. Verfahren nach Anspruch 3 oder Anspruch 4, wobei die Diensttypen einen Best-Effort-Dienst (184) enthalten.

6. Verfahren nach Anspruch 3, Anspruch 4 oder Anspruch 5, wobei die Auswahl von Rechenzentren, die mit der Menge von zur Assoziierung mit einem ersten Dienstziel (190) ausgewählten Wegen assoziiert sind, unabhängig ist von der Auswahl von Rechenzentren, die mit der Menge von zur Assoziierung mit einem anderen Dienstziel (191) ausgewählten Wegen assoziiert sind.

7. Verfahren nach Anspruch 1, Anspruch 2, Anspruch 3, Anspruch 4, Anspruch 5 oder Anspruch 6, wobei die identifizierte Menge von Wegen mit zwei oder mehr Dienstzielkriterien (183) Pareto-optimiert ist.

**8.** Verfahren nach Anspruch 7, wobei die Dienstzielkriterien eine Bandbreite und eine Verzögerung enthalten

**9.** Verfahren nach einem vorhergehenden Anspruch, wobei die Kriterien zur Aufnahme in die Menge von Wegen zur Anzeige ein Zeitfenster enthalten.

**10.** Netzressourcenzuteilungsvorrichtung zum Steuern von Ressourcen in einem cloudbasierten Datennetz, die Folgendes umfasst:

- einen Datenzusammenführer (7) zum Verarbeiten von Netzdaten bezüglich eines Netzes, das eine Vielzahl von untereinander verbundenen Rechenzentren und Netzknoten umfasst, und zum Verarbeiten von Eingaben von Benutzerschnittstellen (3), die durch vorher bestimmte Dienstziele definierte Dienstkriterien und die Knoten, an die die angegebenen Dienste zu übermitteln sind, angeben
- einen Analysator (8) zum Identifizieren eines oder mehrerer der Rechenzentren, die zum Bereitstellen der Dienste, die in den von den Benutzerschnittstellen empfangenen Eingaben angegeben sind, fähig sind, und zum Analysieren einer Vielzahl von Eigenschaften von Wegen, über die jeder Knoten mit den auf diese Weise identifizierten Rechenzentren kommunizieren kann, und dadurch Identifizieren einer Menge solcher Wege, wobei jeder Weg Eigenschaften aufweist, die für ein jeweiliges Dienstziel, das von einer jeweiligen Benutzerschnittstelle empfangen wird, optimiert sind
- einen Auswahlprozessor (9) für Folgendes:

  ◦ Generieren einer Anzeige, die auf Eigenschaften der Menge von Wegen zur Übertragung an die Benutzerschnittstelle (3) hinweist,
  ◦ Empfangen einer Benutzereingabe (19), die einen aus der Menge von Wegen identifiziert,
  ◦ und Steuern des Netzes (2, 5), um den ausgewählten Weg bereitzustellen,

  **dadurch gekennzeichnet, dass** die analysierten Eigenschaften jedes Wegs eine Zeit, zu der der Weg verfügbar sein wird, enthalten.

**11.** Netzressourcenzuteilungssystem nach Anspruch 10, wobei der Auswahlprozessor (9) Mengen von Wegen, die für eine Vielzahl unterschiedlicher Diensttypen verfügbar sind, generiert.

**12.** Netzressourcenzuteilungssystem nach Anspruch 11, wobei die Diensttypen einen mit einer garantierten Bandbreite angebotenen Dienst und einen Best-Effort-Dienst enthalten.

**13.** Netzressourcenzuteilungssystem nach Anspruch 10, Anspruch 11 oder Anspruch 12, wobei das Analysesystem (8) dazu ausgelegt ist, eine Pareto-optimierte Menge von Wegen mit zwei oder mehr Dienstzielkriterien zu generieren.

**14.** Netzressourcenzuteilungssystem nach Anspruch 10, Anspruch 11, Anspruch 12 oder Anspruch 13, wobei die Dienstzielkriterien eine Bandbreite und eine Verzögerung enthalten.

**15.** Computerprogramm oder Suite von Computerprogrammen, das/die durch einen Prozessor ausführbar ist, um zu bewirken, dass der Prozessor das Verfahren nach einem der Ansprüche 1 bis 9 durchführt.

**Revendications**

**1.** Procédé d'allocation de ressources de réseau à des utilisateurs dans un réseau de données en nuage en identifiant (17), pour chaque utilisateur (3), une pluralité de centres de données capables de fournir des services requis par l'utilisateur, en analysant (184, 185) une pluralité de caractéristiques de chemins reliant des noeuds dans le réseau, par lesquels l'utilisateur et chacun des centres de données identifiés peuvent communiquer, en identifiant un ensemble de tels chemins (186), chaque chemin ayant des caractéristiques optimisées pour des critères définis par un objectif de service prédéterminé respectif et, pour chaque chemin de l'ensemble, en générant un affichage (3) indicatif des caractéristiques de ce chemin et, en réponse à une entrée de sélection (19) par l'utilisateur, en allouant des ressources (195) pour fournir un chemin sélectionné par l'utilisateur entre un noeud connecté à l'utilisateur et un centre de données, **caractérisé en ce que** les caractéristiques de chaque chemin analysé comprennent un temps (t1-t2, t2-t3, ...) auquel le chemin sera disponible.

**2.** Procédé selon la revendication 1, dans lequel les caractéristiques comprennent au moins deux caractéristiques parmi la connectivité, le délai, la largeur de bande et le coût.

3. Procédé selon la revendication 1 ou la revendication 2, dans lequel l'affichage (3) indique les caractéristiques des ressources disponibles pour une pluralité de types de services différents (184, 185) .

4. Procédé selon la revendication 3, dans lequel les types de services comprennent un service à largeur de bande garantie (185).

5. Procédé selon la revendication 3 ou la revendication 4, dans lequel les types de services comprennent un service au mieux (184).

6. Procédé selon la revendication 3, la revendication 4 ou la revendication 5, dans lequel la sélection de centres de données associés à l'ensemble de chemins sélectionnés pour association avec un premier objectif de service (190) est indépendante de la sélection des centres de données associés à l'ensemble de chemins sélectionnés pour association avec un autre objectif de service (191).

7. Procédé selon la revendication 1, la revendication 2, la revendication 3, la revendication 4, la revendication 5 ou la revendication 6, dans lequel l'ensemble des chemins identifiés est optimisé par Pareto avec deux, ou davantage, critères d'objectif de service (183).

8. Procédé selon la revendication 7, dans lequel les critères d'objectif de service incluent la largeur de bande et le délai.

9. Procédé selon l'une quelconque des revendications précédentes, dans lequel les critères d'inclusion dans l'ensemble des chemins pour affichage comprennent une fenêtre temporelle.

10. Appareil d'allocation de ressources de réseau pour contrôler les ressources dans un réseau de données en nuage, comprenant :

   - un assembleur de données (7) pour traiter des données de réseau relatives à un réseau comprenant une pluralité de centres de données interconnectés et de noeuds de réseau, et pour traiter des entrées provenant d'interfaces utilisateur (3) spécifiant des critères de service définis par des objectifs de service prédéterminés et les noeuds auxquels les services spécifiés doivent être fournis,
   - un analyseur (8) pour identifier un ou plusieurs des centres de données capables de fournir les services spécifiés dans les entrées reçues des interfaces utilisateur, et analyser une pluralité de caractéristiques de chemins par lesquels chaque noeud peut communiquer avec les centres de données ainsi identifiés, et identifier ainsi un ensemble de tels chemins, chaque chemin ayant des caractéristiques optimisées pour un objectif de service respectif reçu d'une interface utilisateur respective
   - un processeur de sélection (9) pour :
   - générer un affichage indicatif des caractéristiques de l'ensemble de chemins pour transmission à l'interface utilisateur (3),
   - recevoir une entrée utilisateur (19) identifiant l'un des chemins de l'ensemble de chemins
   - et contrôler le réseau (2, 5) pour fournir le chemin sélectionné, **caractérisé en ce que** les caractéristiques de chaque chemin analysé comprennent un temps auquel le chemin sera disponible.

11. Système d'allocation de ressources de réseau selon la revendication 10, dans lequel le processeur de sélection (9) génère des ensembles de chemins disponibles pour une pluralité de types de services différents.

12. Système d'allocation de ressources de réseau selon la revendication 11, dans lequel les types de services comprennent un service à largeur de bande garantie et un service au mieux.

13. Système d'allocation de ressources de réseau selon la revendication 10, la revendication 11 ou la revendication 12, dans lequel le système d'analyse (8) est agencé pour générer un ensemble de chemins optimisé par Pareto avec deux, ou davantage, critères d'objectif de service.

14. Système d'allocation de ressources de réseau selon la revendication 10, la revendication 11, la revendication 12 ou la revendication 13, dans lequel les critères d'objectif de service comprennent la largeur de bande et le délai.

15. Programme d'ordinateur ou une suite de programmes d'ordinateur exécutables par un processeur pour amener le processeur à exécuter le procédé de l'une quelconque des revendications 1 à 9.

Figure 1

EP 3 241 111 B1

Figure 3

Unreserved bandwidth

t1    t2    t3      tn

L1=100Mb   L1=200Mb

...

L2=300Mb   L2=100Mb

...

Ln=200Mb   Ln=400Mb

...

Figure 2

A

$d_1$

$d_2$

$d_3$

$d_4$

B

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011153507 A
- US 2013262681 A
- US 2014328214 A
- US 2008080396 A

### Non-patent literature cited in the description

- **MATHIS ; SEMKE ; MAHDAVI ; OTT.** The Macroscopic Behaviour of The TCP Congestion Avoidance Algorithm. *ACM SIGCOMM Computer Communication Review,* 1997, vol. 27 (3), 67-82